# EUROPEAN PATENT APPLICATION

(11) **EP 1 748 176 A1**
(43) Date of publication of application: **31.01.2007**
(21) Application number: 04724854.7
(22) Date of filing: 31.03.2004
(51) Int. Cl.: F02F 7/00, F01M 11/00

(54) **DIESEL ENGINE AND SHIP AND POWER PLANT USING THE SAME**

(71) Applicant: Hitachi Zosen Corporation, Osaka-shi, Osaka 559-8559 (JP)
(72) Inventor: SUGIMOTO, Iwao, c/o Hitachi Zosen Corporation, Osaka-shi, Osaka 559-8559 (JP); KOBAYASHI, Tatsuya, c/o Hitachi Zosen Corporation, Osaka-shi, Osaka 559-8559 (JP)
(74) Representative: Kloiber, Thomas
(86) International application number: PCT/JP2004/004732
(87) International publication number: WO 2005/100770

(57) **Abstract**

A diesel engine (1) mounted, for example, on a ship, including bearing damage detectors (13), in which fragment collection members (21) capable of receiving lubricating oil dripped from bearings (7) and collecting the fragments of bearing metals (12) mixed in the lubricating oil are disposed at a lower position between the bearings (7) supporting the shaft part of a crank shaft (3) and a crank arm (5) to which a crank pin (4) is fitted.

## Description

### TECHNICAL FIELD

The present invention relates to a large-scale diesel engine, a ship and a power plant using the same, and particularly to an instrument which can detect a bearing damage of the diesel engine.

### BACKGROUND ART

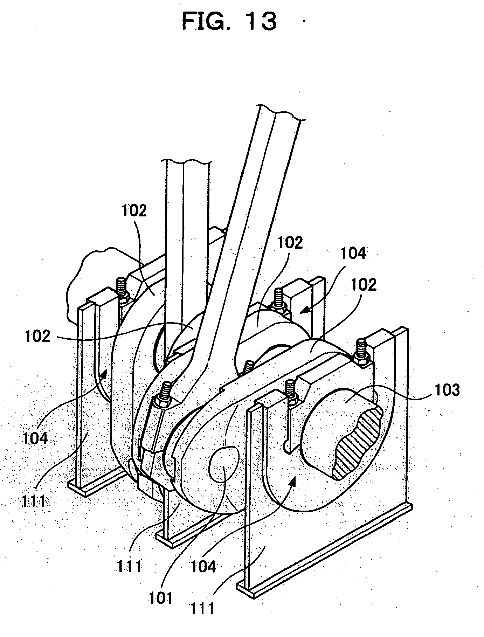

As shown in Fig. 13, a large-scale diesel engine includes a crank shaft 103 in which a plurality of crank pins 101 are provided via crank arms 102 and opposite ends of the crank shaft 103, and intermediate shaft parts between adjacent crank arms 102 and 102 are respectively supported by a bedplate 111 via bearings 104.

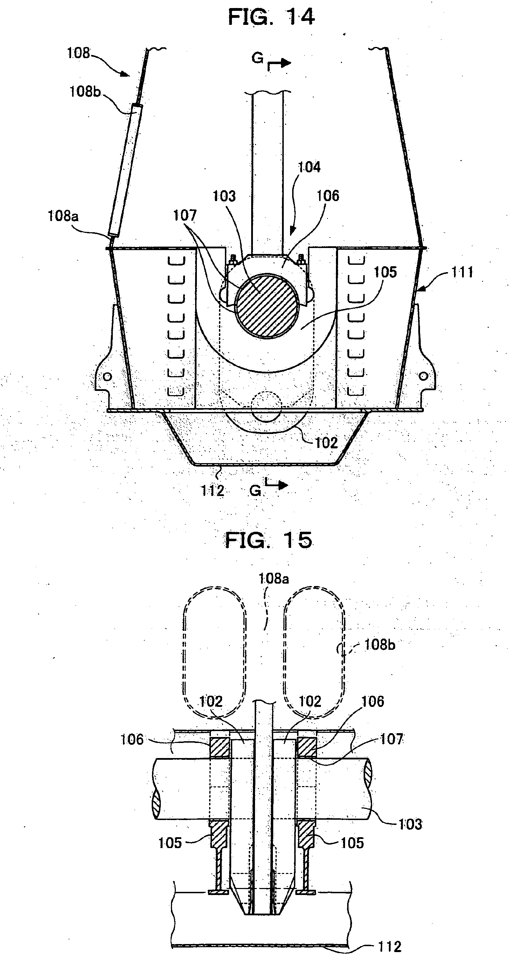

In addition, as shown in Figs. 14 and 15, the respective bearings 104 are constituted by a lower body 105 supported on the bedplate 111 side, an upper body 106 as a cap, and semi-circular bearing metals (for example, white metal is used) 107 mounted inside the bodies 105 and 106.

Further, lubricating oil is supplied to the respective bearings 104, collected into an oil pan 112 provided at a lower position and circularly supplied to the bearings via a filter by an oil pump.

However, in the large-scale diesel engine for a ship, the crank shaft is very long and is carefully provided on the bedplate 111, but since a load to the bearing increases by an improvement of an output (high output) per volume of an engine in itself and an allowable range for mounting is very tight, a mounting failure can be easily brought.

In case that the diesel engine is operated for a long time when the engine failure occurs, the bearing 104 is damaged, specifically, a part of the bearing metal 107 is damaged and fragments thereof are dripped from a clearance with the crank arm 102 together with the lubricating oil, threatening the crank shaft 103 and the bearings 104 to suffer seizure.

As described above, operation is hindered when the bearing metal 107 is damaged, so that it is usual to visually check whether the fragments of the bearing metal 107 have entered into the crank case 108 and dripped into the oil pan 112, by looking into an internal part through an inspection window 108b provided adjacent to a lower position of a side wall portion 108a on a port side of a crank case 108 or by entering into the crank case 108.

In case that the fragments are found by visual checking, a failure occurrence is confirmed, but the lubricating oil mixed with the fragments moves within the oil pan 112, which makes it difficult to identify which parts of the bearing 104 are damaged.

Thus, conventionally, an operator entered the crank case 108, and inserted a micro measurement gauge through the clearance of only 10mm between the crank arm 102 and the bearing 104 to identify damaged places, depending on longtime experiences and perceptions.

However, there are problems that performing this operation in the small crank case 108 is very difficult and much time is required.

Therefore, an objection of the present invention is to provide a diesel engine in which damaged places of the bearing of the crank shaft can be easily identified, and a ship and a power plant including the same.

### DISCLOSURE OF THE INVENTION

A diesel engine comprises: a crank shaft including crank pins respectively connected with a plurality of pistons by means of connecting rods, and supported by a bedplate via a plurality of bearings; a crank case covering an engine main body constituted by the foregoing component members; and an oil pan provided at a lower part of the crank case and collecting lubricating oil supplied to the respective bearings, characterized in that solid material collection members for receiving the lubricating oil dripping from the bearings and collecting solid materials contained in the lubricating oil are disposed at a lower position between the bearings each supporting a journal of the crank shaft and crank arms respectively fitted with the crank pins.

In the diesel engine of the present invention, the solid material collection members are disposed perpendicularly to the crank shaft within the crank case and held on the bedplate supporting the bearings via a holding member.

In another diesel engine of the present invention, the solid material collection members are disposed perpendicularly to the crank shaft within the crank case and supported on the oil pan via a supporting member.

In still another diesel engine of the present invention, the solid material collection members are slanted within a vertical plane perpendicular to the crank shaft.

In still another diesel engine of the present invention, a detection sensor for detecting solid materials is disposed within each solid material collection members, and a solid material collection judging device is provided for receiving a detection signal from the detection sensor to judge whether solid materials have been collected.

Further, a ship of the present invention includes each of the foregoing diesel engines.

Furthermore, a power plant of the present invention includes each of the foregoing diesel engines so as to drive a power generator.

According to the configuration of the diesel engine, the solid material collection members for collecting solid materials are disposed at the lower positions each between the bearing and the crank arm, so that if the solid material such as fragments of the bearing metal is collected within the fragment collection member due to the damage of the bearing, it is possible to find solid material such as remaining fragments of the bearing metal within the solid material collection member by an operator who checks the inside of the crank case through an inspection window during his/her maintenance/inspection work. Thus, it is possible to know the damage of the bearing, and to identify the damaged bearing according to the position where the solid material is found within the fragment collection member.

### BRIEF DESCRIPTION OF THE DRAWINGS

Fig. 1 is a perspective view of a diesel engine in accordance with a first embodiment of the present invention;
Fig. 2 is a cross-sectional view of a main part of the diesel engine;
Fig. 3 is a cross-sectional view taken along the line A-A in Fig. 2;
Fig. 4 is a cross-sectional view of a main part of a diesel engine in accordance with a second embodiment of the present invention;
Fig. 5 is a cross-sectional view taken along the line B-B in Fig. 4;
Fig. 6 is a perspective view taken along the line C-C in Fig. 5;
Fig. 7 is a cross-sectional view of a main part of a diesel engine in accordance with a third embodiment of the present invention;
Fig. 8 is a cross-sectional view taken along the line D-D in Fig. 7;
Fig. 9 is a cross-sectional view of a main part of a diesel engine in accordance with a fourth embodiment of the present invention;
Fig. 10 is a cross-sectional view taken along the line E-E in Fig. 9;
Fig. 11 is a cross-sectional view of a main part of a diesel engine in accordance with a fifth embodiment of the present invention;
Fig. 12 is a perspective view taken along the line F-F in Fig. 11;
Fig. 13 is a perspective view of a diesel engine of a prior art;
Fig. 14 is a cross-sectional view of a main part of the diesel engine; and
Fig. 15 is a cross-sectional view taken along the line G-G in Fig. 14.

### BEST MODE FOR CARRYING OUT THE INVENTION

The present invention will be described in detail with reference to the accompanying drawings.

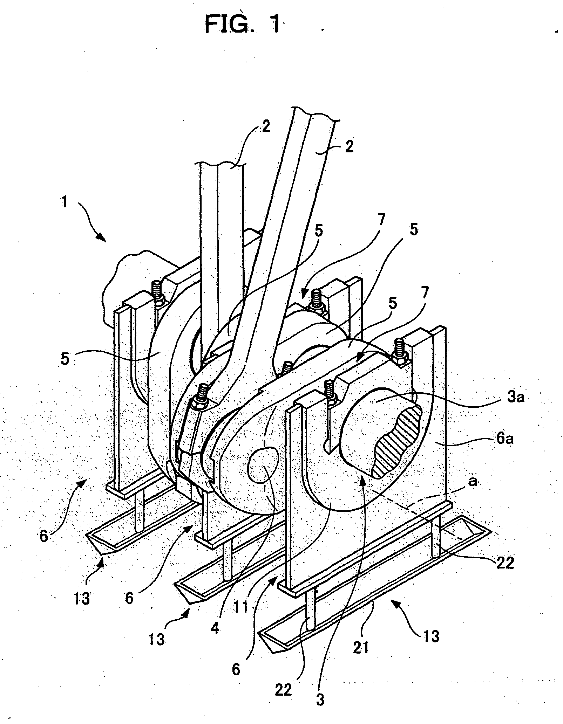

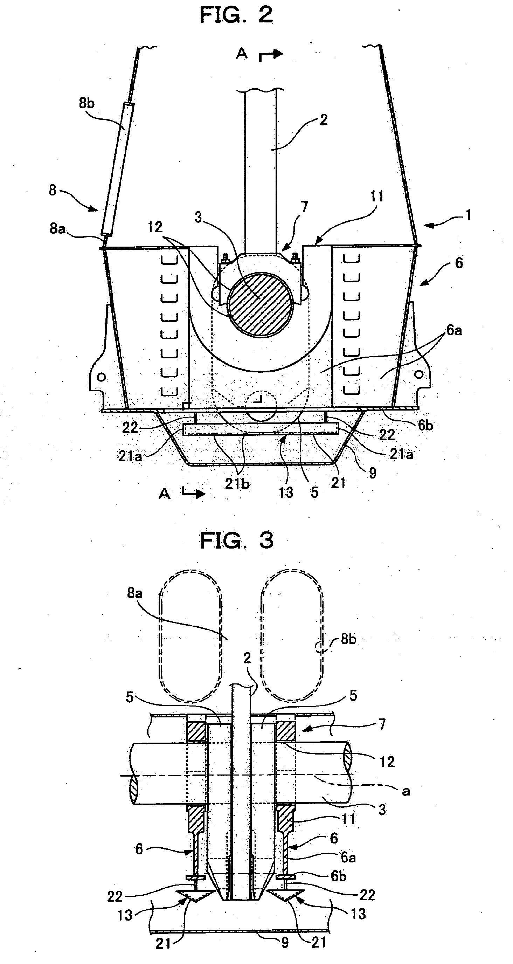

First of all, a diesel engine in accordance with a first embodiment of the present invention will be described with reference to Figs. 1 to 3.

Figs. 1 to 3 show structures of a main part of a diesel engine in accordance with the first embodiment of the present invention.

A diesel engine for a large-scale ship is described as the diesel engine in accordance with the present invention.

As shown in Figs. 1 to 3, a diesel engine 1 includes a plurality of pistons (not shown), and each piston is connected to a crank shaft 3 for producing a torque via a connecting rod 2.

In the crank shaft 3, a crank pin 4 connected to each connecting rod 2 is provided between left and right crank arms (a set of crank arms) 5 and 5, and at a position eccentric to a rotating center thereof, and an intermediate shaft portion 3a between opposite shaft end portions, and the adjacent crank arms 5 and 5 is supported by a bedplate 6 via bearings (main bearing) 7.

In an upper part of the bedplate 6 supporting the crank shaft 3, a cylinder head having a cylinder housing a piston is provided, and a crank case 8 covering both sides of the connecting rods 2 and the crank shaft 3, and an oil pan 9 covering a lower part thereof are provided.

A plurality of inspection windows 8b showing an internal part are provided on one side wall portion (for example, port side) 8a of the crank case 8 in response to a position of the crank pin 4.

The respective bearings (for example, intermediate bearings inside the engine) 7 are constituted by a body (constituted by a lower body and an upper body acting as a cap) 11 and two divided bearing metals 12 disposed inside the body 11. In abnormal, an edge portion of the bearing metal 12 is worn and broken, and fragments of the bearing metal 12 are fallen off from the body 11.

Thus, the diesel engine 1 includes a bearing damage detector 13 capable of collecting the fragments dripped together with lubricating oil and identifying the bearing 7 having a damaged bearing metal 12 by looking into an inside of the crank case 8 through the inspection window 8b.

The bearing damage detector 13 is disposed, for example, at a lower position of a lower flange portion 6b of a crossbar member 6a of the bedplate supporting the bearing 7 and along the crossbar member 6a. The bearing damage detector 13 is constituted by a fragment collection member (a solid material collection member) 21 collecting the fragments (the solid materials) mixed (contained) in the lubricating oil and a pair of holding bars (holding members) 22 provided perpendicularly to the crank shaft 3 with a predetermined interval so as to hold the fragment collection member 21 at the lower flange portion 6b of the crossbar member 6a.

The fragment collection member 21 is elongate in a direction perpendicular to the crank shaft 3 and is a trough-shaped vessel having a V-shaped cross section and having wall portions 21a at opposite ends thereof. A plurality of lubricating oil discharging holes 21b are formed in places of a central lower part of the fragment collection member 21. A size of the hole 21b is smaller than a shortest length of the fragments to be detected so as to catch the fragments.

Accordingly, in case that the end portion of the bearing metal 12 is worn and the fragments are produced during driving the diesel engine 1, the fragments are dripped together with the lubricating oil supplied to the bearing 7 and entered into the fragment collection member 21 disposed in correspondence with the bearing 7.

The lubricating oil entered into the fragment collection member 21 is dripped from the hole 21b formed at the lower position thereof to the oil pan 9 of the crank case 8 and the fragments mixed in the lubricating oil are collected within the fragment collection member 21. Moreover, the lubricating oil dripped on the oil pan 9 is supplied to each bearing through a filter by an oil pump.

As described above, in case that the fragments of the bearing metal 12 are collected within the fragment collection member 21 due to the damage of the bearing 7, when an operator checks the inside of the crank case 8 through the inspection window 8b, the operator can find remaining fragments in the fragment collection member 21 to know that the bearing 7 is damaged and identify the damaged bearing 7 by a position of the fragment collection member 21 where the fragments have been found, in maintenance.

That is to say, in case that the bearing metal 12 of the bearing 7 is damaged, the operator merely inspects the inside through the inspection window 8b to know the damage of the bearing 7 and identify the damaged bearing 7.

Next, a diesel engine in accordance with a second embodiment of the present invention will be described with reference to the drawings.

Moreover, since a portion of the second embodiment different from the first embodiment is the bearing damage detector, the portion will be attentively described and the description of other component members will be omitted by using part numbers described in the first embodiment.

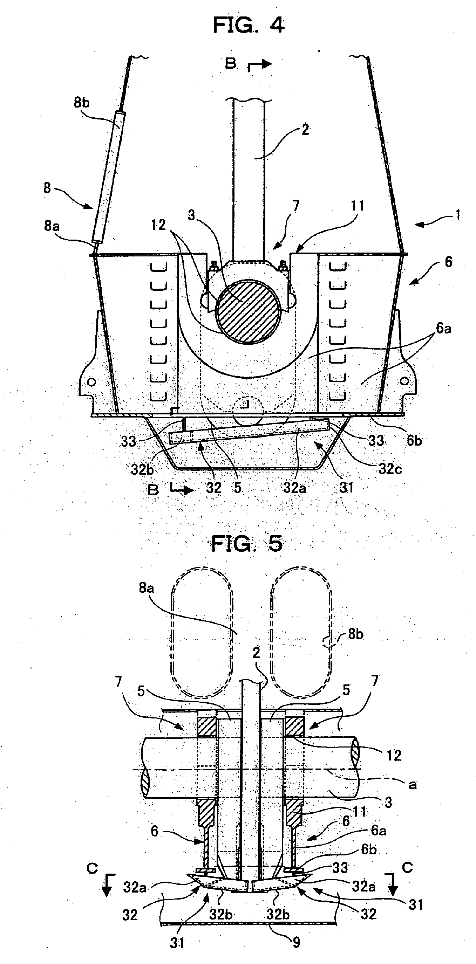

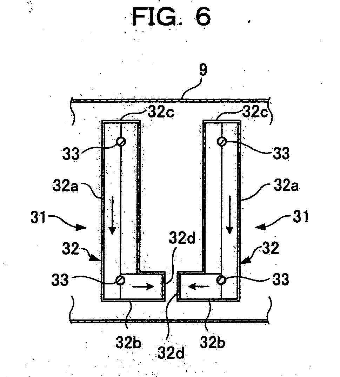

Figs. 4 to 6 show structures of a main part of a diesel engine in accordance with the second embodiment of the present invention.

As shown in Figs. 4 to 6, the bearing damage detector 31 in the diesel engine 1 is constituted by the fragment collection member (solid collection member) 32 disposed at the lower position of the lower flange portion 6b of the crossbar member 6a of the bedplate 6 supporting the bearing 7 (for example, the intermediate bearing) and along the crossbar member 6a to receive the lubricating oil dripped from the bearing 7 and collect the fragments (solid materials) mixed in the lubricating oil, and a pair of supporting bars (supporting members) 33 provided in the direction perpendicular to the crank shaft 3 with a predetermined interval for holding the fragment collection member 32 at the lower flange portion 6b of the crossbar member 6a.

However, the fragment collection member 32 is a trough-shaped vessel having a V-shaped cross section and having an L shape in plan view. That is to say, this vessel is constituted by a lubricating oil receiving portion 32a elongated in a direction perpendicular to the crank shaft 3 and a guide portion 32b connected in a direction perpendicular to an end portion of the lubricating oil receiving portion 32a for leading the lubricating oil to the crank pin 4 side (adjacent to the inspection window).

In addition, one end side (for example, a bow side, that is, a side opposite to the inspection window) of the lubricating oil receiving portion 32a is the wall portion 32c and a tip of the guide portion 32b connected to the other end side is a net portion 32d (for example, an iron net is used).

Moreover, the lubricating oil receiving portion 32a is slanted to lower the inspection window 8b side and the net portion 32d of the guide portion 32b is directed toward the crank pin 4 side, that is, the inspection window 8b side to lower the tip thereof.

Therefore, in case that the end portion of the bearing metal 12 in the bearing 7 is worn and the fragments are produced during driving the diesel engine 1, the fragments are also dripped with the lubricating oil within the fragment collection member 32 disposed in correspondence with the bearing 7.

The lubricating oil flows onto the guide portion 32b within the lubricating oil receiving portion 32a and is dripped into the oil pan 9 from the net portion 32d at the end surface thereof.

And in case that the fragments of the bearing metal 12 are mixed in the lubricating oil, the fragments of the bearing metal 12 are collected in the net portion 32d.

That is to say, since the fragments are gathered adjacent to the inspection window, the fragments can be found through the inspection window 8b more easily than the above-described configuration of the first embodiment.

Next, a diesel engine in accordance with a third embodiment of the present invention will be described with reference to the drawings.

Moreover, since a portion of the third embodiment different from the first embodiment is the bearing damage detector, the portion will be attentively described and the description of other component members will be omitted by using the part numbers described in the first embodiment.

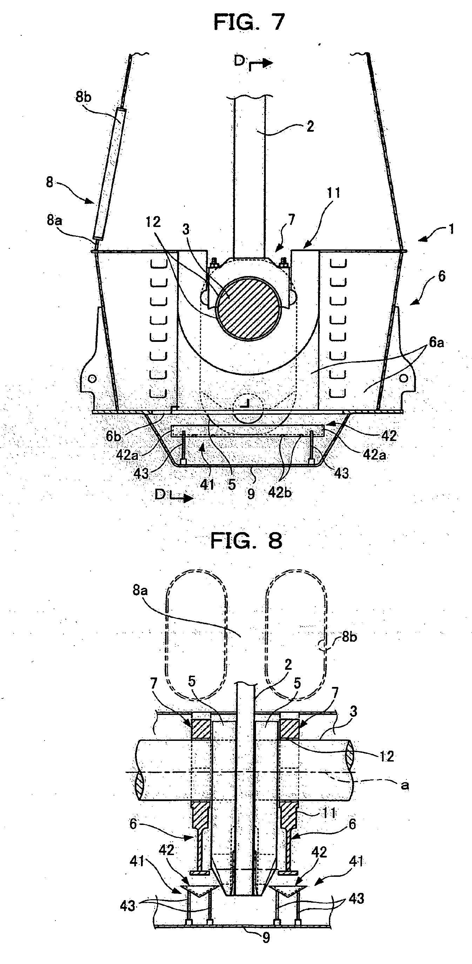

Figs. 7 and 8 show structures of a main part of a diesel engine in accordance with the third embodiment of the present invention.

As shown in Figs. 7 to 8, a bearing damage detector 41 in the diesel engine 1 is constituted by a fragment collection member (solid material collection member) 42 disposed at the lower position of the lower flange portion 6b of the crossbar member 6a of the bedplate 6 supporting the bearing 7 (i.e. the intermediate bearing) and along the crossbar member 6a to receive the lubricating oil dripped from the bearing 7 and collect the fragments (solid materials) mixed in the lubricating oil, and a pair of supporting bar (supporting member) 43 provided in a direction perpendicular to the crank shaft 3 with a predetermined interval for holding the fragment collection member 32 at the lower flange portion 6b of the crossbar member 6a.

Similar to the first embodiment, the fragment collection member 42 is elongated in a direction perpendicular to the crank shaft 3 and is a trough-shaped vessel having a V-shaped cross section and having wall portions 42a at opposite ends thereof. Furthermore, a plurality of lubricating oil discharging holes 42b are formed in places of a central lower part of the fragment collection member 42. A size of the hole 42b is smaller than a shortest length of a fragment to be detected so as to catch the fragments.

Therefore, in case that the end portion of the bearing metal 12 in the bearing 7 is worn and the fragments are produced during driving the diesel engine 1, the fragments are also dripped into the fragment collection member 41 disposed in correspondence with the bearing 7 to obtain the same effect as the above-described first embodiment.

Next, a diesel engine in accordance with a fourth embodiment of the present invention will be described with reference to the drawings.

Moreover, since a portion of the fourth embodiment different from the first embodiment is the bearing damage detector, the portion will be attentively described and the description of other component members will be omitted by using the part numbers described in the first embodiment.

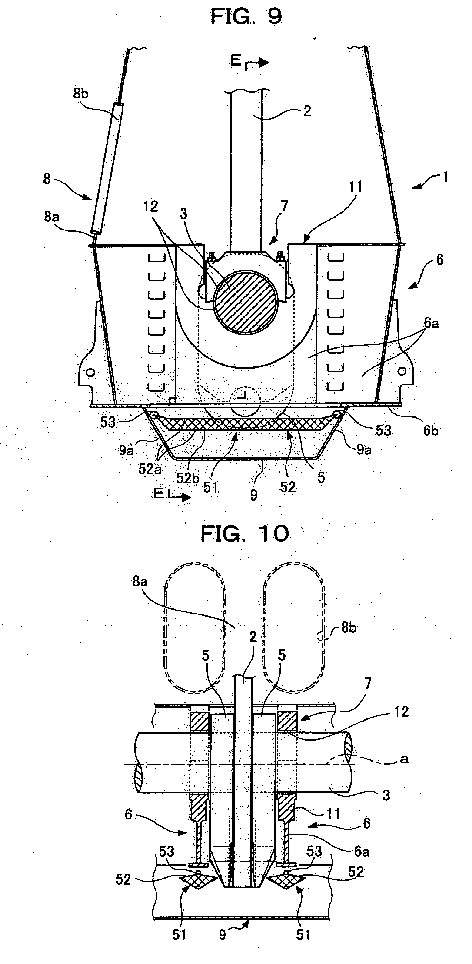

Figs. 9 and 10 show structures of a main part of a diesel engine in accordance with the fourth embodiment of the present invention.

As shown in Figs. 9 and 10, a fragment collection member 52 in a bearing damage detector 51 of the diesel engine 1 is disposed at the lower position (two places of left and right sides of the diesel engine) of the crossbar member, and constituted by a rectangular frame member 52a (for example, a wire is used) hung via a hanging fixer 53 from the upper part of a slanted side wall portion 9a of the oil pan 9 and an iron net 52b having the V-shaped cross section.

In this case, when the fragments of the bearing metal 12 in the bearing 7 are dripped into the fragment collection member 52 together with the lubricating oil, the only fragments are also collected to obtain the same effect as the above-described first embodiment.

Next, a diesel engine in accordance with a fifth embodiment of the present invention will be described with reference to the drawings.

In the diesel engine in accordance with the fifth embodiment, in case that the fragments of the bearing metal are collected in the fragment collection member of the bearing damage detector in accordance with the above-described second embodiment, the fragments can be automatically detected. Accordingly, the part relating to the bearing damage detector is attentively described, based on the bearing damage detector described in the second embodiment.

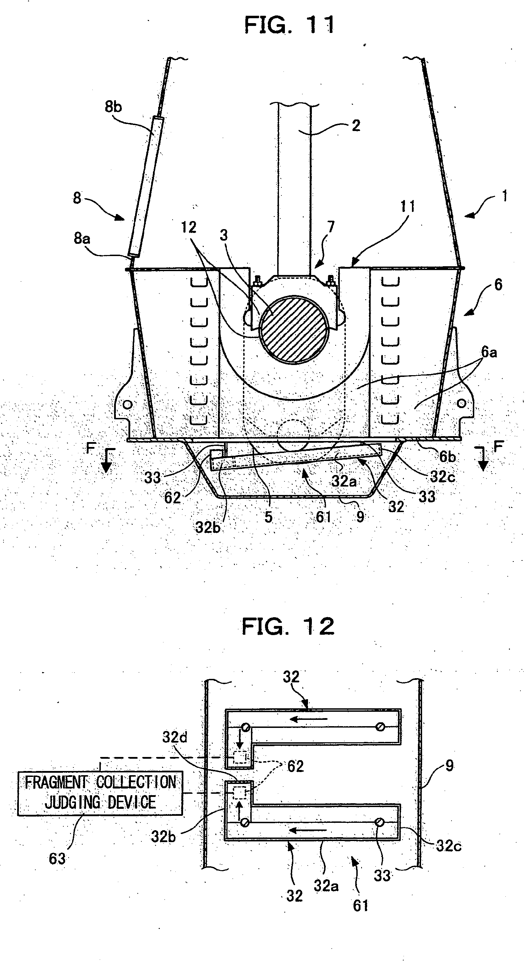

Figs. 11 and 12 show structures of a main part of a diesel engine in accordance with the fifth embodiment of the present invention.

That is to say, a bearing damage detector 61 of the diesel engine 1 includes a detection sensor (for example, an eddy current detection sensor is used) 62 for detecting a metal disposed just above the guide portion 32b of the fragment collection member 32 described in the second embodiment and a fragment collection judging device 63 which judges the fragments are dripped and collected within the fragment collection member 32 by inputting a signal detected in each detection sensor 62.

The fragment collection judging device 63 performs the judgment by comparing an output signal when there is no solid material, that is, fragment with a sensor output signal when the fragment is included in the detection range. Specifically, by accumulating variations of the output signal and time data, the fragment collection judging device 63 watches a progress thereof to perform the judgment.

Moreover, in case that fragments are detected by the fragment collection judging device 63, an alarm signal may be outputted and information such as light, sound and indication which can be identified by a human may be used.

However, in each embodiment described above, the cross section of the vessel as the fragment collection member is V-shaped, but not limited by this and may be semi-circular.

Furthermore, as other embodiments of the present invention, a ship where the diesel engine described in each embodiment described above is mounted and an electric power facility constituted by a generator driven by the diesel engine in accordance with each embodiment may be included.

## Claims

1. A diesel engine comprising:
a crank shaft including crank pins respectively connected with a plurality of pistons by connecting rods, and supported by a bedplate via a plurality of bearings;
a crank case covering an engine main body constituted by the component members; and
an oil pan provided at a lower part of the crank case and collecting lubricating oil supplied to the respective bearings, **characterized in that**
solid material collection members for receiving the lubricating oil dripping from the bearings and collecting solid materials contained in the lubricating oil are disposed at a lower position between the bearings each supporting a journal of the crank shaft and crank arms respectively fitted with the crank pins.

2. The diesel engine according to claim 1, wherein the solid material collection members are disposed perpendicularly to the crank shaft within the crank case and held on the bedplate supporting the bearings via a holding member.

3. The diesel engine according to claim 1, wherein the solid material collection members are disposed perpendicularly to the crank shaft within the crank case and supported on the oil pan via a supporting member.

4. The diesel engine according to any one of claims 1 to 3, wherein the solid material collection members are slanted within a vertical plane perpendicular to the crank shaft.

5. The diesel engine according to any one of claims 1 to 4, wherein a detection sensor for detecting solid materials is disposed within each solid material collection member, and a solid material collection judging device is provided for receiving a detection signal from the detection sensor to judge whether solid materials have been collected.

6. A ship including the diesel engine according to any one of claims 1 to 5.

7. A power plant including the diesel engine according to any one of claims 1 to 5 to drive a power generator.
